# EUROPÄISCHE PATENTSCHRIFT

(11) **EP 2 726 313 B1**
(45) Veröffentlichungstag und Bekanntmachung des Hinweises auf die Patenterteilung: **23.09.2015**
(21) Anmeldenummer: 12726587.4
(22) Anmeldetag: 08.06.2012
(51) Int. Cl.: B60K 17/22, B60K 17/344

(54) **ANTRIEBSSTRANGANORDNUNG FÜR KRAFTFAHRZEUG UND BAUSATZ FÜR ANTRIEBSSTRÄNGE VON KRAFTFAHRZEUGEN UNTERSCHIEDLICHER ART**
DRIVETRAIN ARRANGEMENT FOR A MOTOR VEHICLE, AND CONSTRUCTION KIT FOR DRIVETRAINS OF MOTOR VEHICLES OF DIFFERENT TYPES
DISPOSITIF DE CHAÎNE DE TRANSMISSION POUR VÉHICULE AUTOMOBILE ET KIT DE MONTAGE POUR CHAÎNES DE TRANSMISSION DE DIFFÉRENTS TYPES DE VÉHICULES AUTOMOBILES

(30) Priorität: 01.07.2011 DE 102011106245; 14.09.2011 DE 102011113297
(43) Veröffentlichungstag der Anmeldung: 07.05.2014
(73) Patentinhaber: Audi AG, 85045 Ingolstadt (DE)
(72) Erfinder: VOGTHERR, Karin, 86668 Karlshuld (DE); HUDITZ, Peter, 85051 Ingolstadt (DE); MÄRKL, Johann, 86633 Neuburg a. d. Donau (DE)
(74) Vertreter: Wohnert, Dietmar
(86) Internationale Anmeldenummer: PCT/EP2012/002428
(87) Internationale Veröffentlichungsnummer: WO 2013/004331

(56) Entgegenhaltungen:
- EP-A2- 1 914 105
- WO-A1-93/05640
- DE-A1- 4 222 035
- DE-A1-102008 042 044
- DE-U1- 20 212 094
- US-A1- 2010 313 706

## Beschreibung

Die Erfindung betrifft eine Antriebsstranganordnung für ein Kraftfahrzeug, die in besonderem Maße für Allradfahrzeuge einsetzbar ist.

Aus der DE 202 12 093 U1 ist ein Antriebsstrang für Fahrzeuge mit Allrad- oder Frontantrieb bekannt, bei dem ein Antrieb (Verbrennungsmotor) über eine Antriebswelle mit einem Zentralgetriebe gekoppelt ist. Abtriebsseitig hinter dem Zentralgetriebe ist ein Zahnrad angeordnet, das mit einem Zahnrad kämmt, welches zu einer Seitenwelle gehört. Die Seitenwelle ist nichtachsparallel zur Längsachse oder zu den Hauptwellen des Gesamtgetriebes ausgerichtet, und zwar als Ritzelwelle eines Differentialgetriebes für die Vorderachse ausgebildet. Auf diese Weise kann das Vorderachsdifferentialgetriebe bezüglich einer Querachse des Kraftfahrzeugs versetzt zu dem Antrieb angeordnet sein.

Die an die DE 20212093 U1 anknüpfende DE 10 2008 042 038 A1 beschreibt eine Antriebsstranganordnung für ein Fahrzeug, bei dem darüber hinaus das Differentialgetriebe außerhalb des Zentralgetriebes angeordnet ist. Die in einem Winkel zur Antriebswelle verlaufende Welle ist hierbei als Beveloidwelle ausgebildet.

Die Konstruktionen von Antriebsstranganordnungen, bei denen eine Beveloidwelle schräg zur Hauptwelle verläuft, haben den Nachteil, dass eine bestimmte Beveloidwelle bekannter Länge bei einer Veränderung der Bauraumsituation nicht im selben Winkel stehen kann, sondern gedreht werden muss; dies hat den Nachteil, dass die Zähne nicht optimal kämmen. Zu Änderungen in der Bauraumsituation kommt es insbesondere dann, wenn ein bestimmter Fahrzeugtyp in unterschiedlichen Varianten gebaut werden soll.

Die EP 1 914 105 A2 gemäß dem Oberbegriff des Anspruchs 1, beschreibt einen Allrad-Antriebsstrang für ein Kraftfahrzeug mit einem Kennungswandlergetriebe in Längsbauweise. Das Getriebe weist eine Abtriebswelle auf, die mit einer ersten Antriebswelle der ersten Achse verbunden ist und eine dazu parallele Vorgelegewelle, die mit einer zweiten Abtriebswelle für die zweite Achse verbunden ist. Dabei ist eine Verteilereinrichtung koaxial zur zweiten Antriebswelle angeordnet. Die zweite Antriebswelle kann weiterhin schräg zur Vorgelegewelle angeordnet sein und über ein Gleichlaufgelenk mit einem Achsgetriebe für die zweite Achse verbunden sein.

Die DE 202 12 094 U1 beschreibt einen Antriebsstrang für ein Allrad-Kraftfahrzeug mit einem Motor und einem Gesamtgetriebe, das ein Zentralgetriebe, eine Längsdifferentialgetriebe, ein Vorderachsdifferentialgetriebe und eine Seitenwelle umfasst. Das Zentralgetriebe umfasst eine Antriebswelle, die über Zahnräder das Längsdifferentialgetriebe antreibt. Das Längsdifferentialgetriebe umfasst eine erste Ausgangswelle, die mit einer Kardanwelle zum Antrieb eines Hinterachsdifferentials gekoppelt ist, und eine zweite Ausgangswelle, die über Zahnräder mit der Seitenwelle gekoppelt ist, welche in einem Winkel zu den Hauptwellen des Zentralgetriebes angeordnet sein kann. Dazu können die koppelnden Zahnräder kegelförmig ausgebildet sein.

Die US 2010/0313706 A1 beschreibt einen Antriebsstrang für ein Allrad-Kraftfahrzeug mit einem Verteilergetriebe mit zueinander angewinkelten Ausgangswellen zum Antrieb eines Vorderrad-Antriebstrangs und eines Hinterrad-Antriebstrangs. Die beiden Ausgangswellen jeweils mit einer Antriebswelle gekoppelt, welche wiederum mit einem Vorderachsdifferential und einem Hinterachsdifferential gekoppelt sind. Die Vorderradantriebswelle kann dabei über ein Gelenk (31) mit dem Vorderachsdifferential gekoppelt sein.

Es ist die Aufgabe der vorliegenden Erfindung, einen Weg aufzuzeigen, wie eine Konstruktion für eine Antriebsstranganordnung für ein Kraftfahrzeug aussehen kann, bei der vorhandene Bauteile flexibler genutzt werden können.

Die Aufgabe wird durch eine Antriebsstranganordnung mit den Merkmalen gemäß Patentanspruch 1 gelöst und in einem anderen Aspekt durch einen Bausatz für Antriebsstränge von Kraftfahrzeugen unterschiedlicher Art gemäß Patentanspruch 5 gelöst.

Bei der erfindungsgemäßen Antriebsstranganordnung für ein Kraftfahrzeug mit einem Antrieb, der eine Antriebswelle umfasst, und mit einem mit der Antriebswelle in Verbindung stehenden Verteilergetriebe, das ein Zahnrad aufweist oder mit einem Zahnrad gekoppelt ist, greift eine weitere Welle über ein Zahnrad in dieses Zahnrad ein, wobei diese weitere Welle zumindest über ein Gelenk mit einer zu einem Differentialgetriebe zugehörigen Ritzelwelle gekoppelt ist. Erfindungsgemäß ist die weitere Welle an einem dem Zahnrad abgewandten Ende der weiteren Welle über das Gelenk mit einer Zwischenwelle gekoppelt, wobei die Zwischenwelle durch ein Verbindungsteil, das als eine Steckverzahnung oder eine Flanschverbindung ausgebildet ist, mit der Ritzelwelle gekoppelt, denn diese Anordnung ist besonders flexibel.

Durch die Erfindung werden die Funktionen der Ritzelwelle und der mit dem im oberen Abschnitt genannten Zahnrad kämmenden Welle voneinander getrennt; die Trennung wird durch das Gelenk ermöglicht.

Auf diese Weise ist es möglich, drei der vier Bauteile wiederholt zu verwenden, wenn sich die Bauraumerfordernisse ändern, lediglich das vierte Bauteil muss ausgetauscht werden.

Beispielsweise ist die Antriebsstranganordnung so ausgestaltbar, dass die weitere Welle in einem Winkel zur Antriebswelle verläuft und als Beveloidwelle ausgebildet ist. In diesem Fall lassen sich Ritzelwellen (oder Kombinationen aus Ritzelwelle, Verbindungsteil und Zwischenwelle) unterschiedlicher Länge verwenden, damit die Beveloidwelle bei unterschiedlicher Länge der Gesamtanordnung stets im selben Raumwinkel steht.

Alternativ hierzu kann die weitere Welle auch parallel zur Antriebswelle verlaufen, wohingegen dann die Ritzelwelle mit der Zwischenwelle in einem Winkel zur Antriebswelle verläuft. Hier lässt sich die Ritzelwelle stets gleich gestalten, und lediglich die weitere Welle muss unterschiedlich lang gestaltet werden, wenn aufgrund unterschiedlicher Bauraumgegebenheiten unterschiedliche Längen für die Gesamtanordnung zur Verfügung stehen.

Allen Anordnungen gemeinsam ist es, dass das Differentialgetriebe, welches bevorzugt ein Vorderachsdifferentialgetriebe ist, neben dem Antrieb angeordnet ist, beispielsweise unmittelbar an eine Motorölwanne einer Verbrennungskraftmaschine oder im vorderen Bereich des Getriebes angrenzt.

Der erfindungsgemäße Bausatz beinhaltet, dass eine Ritzelwelleneinheit für ein Differentialgetriebe bereitgestellt ist, mit einer weiteren Welle und mit einem Gelenk zum Koppeln der Ritzelwelleneinheit mit der weiteren Welle, wobei die Ritzelwelleneinheit aus einer Ritzelwelle, einem Verbindungsteil zum Koppeln der Ritzelwelle mit einer Zwischenwelle und der Zwischenwelle zum Koppeln mit dem Gelenk besteht. Dabei ist das Verbindungsteil eine Steckverzahlung oder eine Flanschverbindung und eine der Einheitenarten weist mindestens zwei Repräsentanten auf, d.h. eine der Wellen, die Ritzelwelleneinheit oder die weitere Welle, muss zumindest zweifach bereitgestellt werden, und zwar vorliegend in unterschiedlicher Länge. Durch die unterschiedliche Länge einer der Wellen lässt sich die jeweils andere Art von Welle unverändert halten.

In einem Fall muss die Ritzelwelle beziehungsweise Ritzelwelleneinheit zweifach in unterschiedlicher Länge bereitgestellt werden, nämlich eben bei der oben genannten Ausführungsform, bei der die weitere Welle in einem Winkel zur Antriebswelle verläuft und als Beveloidwelle ausgebildet ist. Alternativ hierzu kann für den Fall, dass die weitere Welle parallel zur Antriebswelle verläuft und die Ritzelwelle in einem Winkel zur Antriebswelle verläuft, eine entsprechende Antriebsstranganordnung in unterschiedlichen Varianten dadurch bereitgestellt werden, dass die Ritzelwelle oder die weitere Welle zweifach in unterschiedlicher Länge bereitgestellt wird.

Nachfolgend wird eine bevorzugte Ausführungsform der Erfindung unter Bezug auf die Zeichnung näher beschrieben, in der
- Fig. 1: in schematischer Draufsicht ein Kraftfahrzeug mit einer ersten erfindungsgemäßen Antriebsstranganordnung zeigt; und
- Fig. 2: in schematischer Draufsicht ein Kraftfahrzeug mit einer zweiten erfindungsgemäßen Antriebsstranganordnung zeigt.

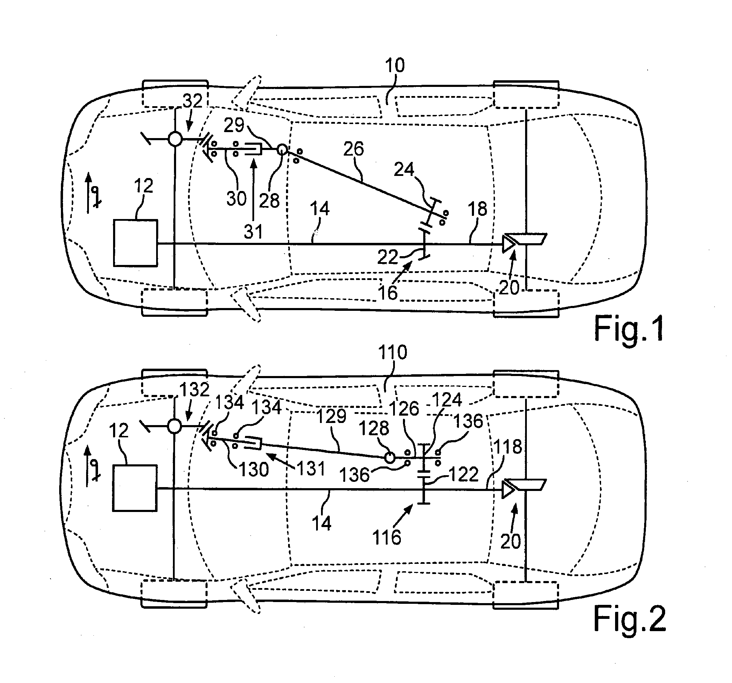

Ein in Fig. 1 gezeigtes und im Ganzen mit 10 bezeichnetes Kraftfahrzeug ist vorliegend ein Allradfahrzeug: Es weist einen Antrieb 12 auf, der über eine Antriebswelle 14 mit einer Verteilergetriebe 16 gekoppelt ist. Von dem Verteilergetriebe 16 führt eine Welle 18 in ein Differentialgetriebe 20, zum Antrieb der Hinterräder. Das Verteilergetriebe 16 verteilt das von der Antriebswelle 14 eingetragene Drehmoment auf die Hinter- und die Vorderräder. Die Ankopplung an die Vorderräder erfolgt vorliegend dadurch, dass mit einem Zahnrad 22 des Verteilergetriebes 16 ein weiteres Zahnrad 24 kämmt, das zu einer Beveloidwelle 26 gehört. Diese ist an dem dem Zahnrad 24 abgewandten Ende über ein Gelenk 28, das als Kugel- oder Kardangelenk ausgebildet sein kann, mit einer Zwischenwelle 29 gekoppelt, die ihrerseits mit einer Ritzelwelle 30, die zu einem Vorderachsdifferential 32 gehört, über ein Verbindungsteil 31, d.h. eine Steckverzahnung oder eine Flanschverbindung, gekoppelt ist. Somit ist die Beveloidwelle 26 über das Gelenk 28 mit einer Ritzelwelleneinheit aus Zwischenwelle 29, Verbindungsteil 31 und Ritzelwelle 30 und damit mit der Ritzelwelle 30 selbst gekoppelt.

Möchte man nun die Grundkonstruktion des Kraftfahrzeugs 10 gemäß Fig. 1 verwenden, hierbei aber den Abstand zwischen dem Verteilergetriebe 16 und dem Vorderachsdifferential 32 verkleinern oder vergrößern, so muss man lediglich die Länge der Ritzelwelle 30 anpassen. Alternativ kann man die Länge der Zwischenwelle 29 anpassen. In entsprechenden Bausätzen können neben der Beveloidwelle 26 und dem Gelenk 28 mehrere Ritzelwellen 30 in unterschiedlicher Länge oder mehrere Ritzelwelleneinheiten aus Ritzelwelle 30, Verbindungsteil 31 und Zwischenwelle 29 in unterschiedlicher Länge bereitgestellt sein, damit das Kraftfahrzeug 10 in unterschiedlichen Varianten baubar ist.

In Abwandlung dieser Ausführungsform zeigt Fig. 2 ein Kraftfahrzeug 110 mit einem Antrieb 12 und einer Antriebswelle 14, wobei ein Verteilergetriebe 116 vorliegend ein Zahnrad 122 aufweist, das nicht mit einer Beveloidwelle kämmt, sondern mit einem herkömmlichen Zahnrad 124, das mit einer Welle 126 gekoppelt ist, die parallel zur Antriebswelle 14 verläuft. Ein Gelenk 128 befindet sich am dem Zahnrad 124 abgewandten Ende der Welle 126 und koppelt dieses mit einer Zwischenwelle 129, die vorliegend länger als die Zwischenwelle 29 ist, wobei die Zwischenwelle 129 die Welle 126 vorliegend über ein Verbindungsteil 131 mit der Ritzelwelle 130 koppelt. Das Differentialgetriebe 132 ist das Vorderachsdifferentialgetriebe.

Will man nun die Konstruktion 110 als solche bei Fahrzeugen 110 unterschiedlicher Länge bzw. unterschiedlichen Abstands zwischen dem Verteilergetriebe 116 und dem Vorderachsdifferentialgetriebe 132 einsetzen, so muss man lediglich die Länge der weiteren Welle 126 variieren. In entsprechenden Bausätzen für eine Mehrzahl von solchen Fahrzeugen kann die Ritzelwelle 130 mit der Zwischenwelle 129 immer gleich ausgebildet sein, das Gelenk 128 ebenfalls in mehrfacher Ausführungsform unverändert vorliegen, wohingegen die weitere Welle 126 in unterschiedlichen Längen bereitgestellt sein kann.

Den Ausführungsformen gemäß Fig. 1 und Fig. 2 gemeinsam ist es, dass das Vorderachsdifferential 32 bzw. 132 bezogen auf eine Querachse q des Fahrzeugs neben dem Antrieb 12 angeordnet ist, zum Beispiel unmittelbar an eine Motorölwanne des Antriebs 12 angrenzt.

Die Ausführungsform gemäß Fig. 1 hat den Vorteil, dass bekannte Bauteile wie eine Beveloidwelle 26 eingesetzt werden können und kaum abgewandelt werden müssen. Die Ausführungsform gemäß Fig. 2 hat den Vorteil, dass das Lagern der Wellen 126 bzw. 130 erleichtert wird, vgl. die Lager 134 im Bereich der Ritzelwelle 130 und die Lager 136 im Bereich der weiteren Welle 126. Ein Beveloidtrieb ist auch nicht erforderlich bei der Ausführungsform gemäß Fig. 2.

## Patentansprüche

1. Antriebsstranganordnung für ein Kraftfahrzeug, mit einem Antrieb (12), der eine Antriebswelle (14) umfasst, und mit einem mit der Antriebswelle (14) in Verbindung stehenden Verteilergetriebe (16, 116), das ein Zahnrad (22, 122) aufweist oder mit einem Zahnrad gekoppelt ist, in welches eine weitere Welle (26, 126) über ein Zahnrad (24, 124) eingreift, die über ein Gelenk (28, 128) mit einer zu einem Differentialgetriebe (32, 132) zugehörigen Ritzelwelle (30, 130) gekoppelt ist,
**dadurch gekennzeichnet, dass**
die weitere Welle an einem dem Zahnrad abgewandten Ende der weiteren Welle über das Gelenk (28,128) mit einer Zwischenwelle (29, 129) gekoppelt ist, wobei die Zwischenwelle durch ein Verbindungsteil (31,131), welches als eine Steckverzahnung oder eine Flanschverbindung ausgebildet ist, mit der Ritzelwelle (30, 130) gekoppelt ist.

2. Antriebsstranganordnung nach Anspruch 1,
**dadurch gekennzeichnet, dass**
die weitere Welle (26) in einem Winkel zur Antriebswelle (14) verläuft und als Beveloidwelle ausgebildet ist.

3. Antriebsstranganordnung nach Anspruch 1,
**dadurch gekennzeichnet, dass**
die weitere Welle (126) parallel zur Antriebswelle (14) verläuft und die Ritzelwelle (130) in einem Winkel zur Antriebswelle (14) verläuft.

4. Antriebsstranganordnung nach einem der Ansprüche 1 bis 3,
**dadurch gekennzeichnet, dass**
das Differentialgetriebe (32, 132) neben dem Antrieb (12) angeordnet ist.

5. Bausatz für Antriebsstränge von Kraftfahrzeugen (10, 110) unterschiedlicher Art, mit einer Ritzelwelleneinheit für ein Differentialgetriebe (32, 132), mit einer weiteren Welle (26, 126), und mit einem Gelenk (28, 128) zum Koppeln der Ritzelwelleneinheit mit der weiteren Welle (26, 126),
**dadurch gekennzeichnet, dass**
die Ritzelwelleneinheit aus einer Ritzelwelle (30, 130), einem Verbindungsteil (31, 131) zum Koppeln der Ritzelwelle mit einer Zwischenwelle und der Zwischenwelle (29, 129) zum Koppeln mit dem Gelenk besteht, wobei das Verbindungsteil eine Steckverzahnung oder eine Flanschverbindung ist, und wobei eine Welle (30, 126) oder die Ritzelwelleneinheit zumindest zweifach in unterschiedlicher Länge bereitgestellt ist.

6. Bausatz nach Anspruch 5,
**dadurch gekennzeichnet, dass**
die Ritzelwelle (30) und/oder die Zwischenwelle (29) zweifach in unterschiedlicher Länge bereitgestellt ist beziehungsweise sind.

7. Bausatz nach Anspruch 5,
**dadurch gekennzeichnet, dass**
die weitere Welle (126) zweifach in unterschiedlicher Länge bereitgestellt ist.

## Claims

1. Drivetrain arrangement for a motor vehicle, comprising a drive (12) which comprises a drive shaft (14) and comprising a transfer case (16, 116) which is connected to the drive shaft (14) and has a gearwheel (22, 122) or is coupled to a gearwheel in which a further shaft (26, 126) engages by means of a gearwheel (24, 124), which shaft is coupled, by means of a joint (28, 128), to a pinion shaft (30, 130) associated with a differential gear (32, 132),
**characterised in that**
the further shaft is coupled, by means of the joint (28, 128), to an intermediate shaft (29, 129) at an end of the further shaft remote from the gearwheel, the intermediate shaft being coupled to the pinion shaft (30, 130) by a connection part (31, 131) which is configured as a spline or a flange connection.

2. Drivetrain arrangement according to claim 1,
**characterised in that**
the further shaft (26) extends at an angle to the drive shaft (14) and is configured as a beveloid shaft.

3. Drivetrain arrangement according to claim 1,
**characterised in that**
the further shaft (126) extends in parallel with the drive shaft (14) and the pinion shaft (130) extends at an angle to the drive shaft (14).

4. Drivetrain arrangement according to any of claims 1 to 3,
**characterised in that**
the differential gear (32, 132) is arranged next to the drive (12).

5. Construction kit for drivetrains of motor vehicles (10, 110) of different kinds, comprising a pinion shaft unit for a differential gear (32, 132), comprising a further shaft (26, 126) and comprising a joint (28, 128) for coupling the pinion shaft unit to the further shaft (26, 126),
**characterised in that**
the pinion shaft unit consists of a pinion shaft (30, 130), a connection part (31, 131) for coupling the pinion shaft to an intermediate shaft, and the intermediate shaft (29, 129) for coupling to the joint, the connection part being a spline or a flange connection, and a shaft (30, 126) or the pinion shaft unit being provided at least twice in different lengths.

6. Construction kit according to claim 5,
**characterised in that**
the pinion shaft (30) and/or the intermediate shaft (29) is/are provided twice in different lengths.

7. Construction kit according to claim 5,
**characterised in that**
the further shaft (126) is provided twice in different lengths.

## Revendications

1. Dispositif de transmission pour un véhicule automobile, avec un dispositif moteur (12) qui comprend un arbre moteur (14) et avec une boîte de transfert (16, 116) qui est en liaison avec l'arbre moteur (14) et qui comporte une roue dentée (22, 122) ou est couplée à une roue dentée, dans laquelle s'engrène par l'intermédiaire d'une roue dentée (24, 124) un autre arbre (26, 126) qui est couplé par l'intermédiaire d'une articulation (28, 128) avec un arbre à pignon (30, 130) associé à un mécanisme de différentiel (32, 132),
**caractérisé en ce que** l'autre arbre est couplé au niveau d'une extrémité, éloignée de la roue dentée, de l'autre arbre à un arbre intermédiaire (29, 129) par l'intermédiaire de l'articulation (28, 128), l'arbre intermédiaire étant couplé avec l'arbre à pignon (30, 130) par une partie de liaison (31, 131) qui est conçue comme une cannelure à emboîtement ou un assemblage à brides.

2. Dispositif de transmission selon la revendication 1, **caractérisé en ce que** l'autre arbre (26) s'étend selon un certain angle par rapport à l'arbre moteur (14) et est conçu comme un arbre à développante conique.

3. Dispositif de transmission selon la revendication 1, **caractérisé en ce que** l'autre arbre (126) s'étend parallèlement à l'arbre moteur (14) et l'arbre à pignon (130) s'étend selon un certain angle par rapport à l'arbre moteur (14).

4. Dispositif de transmission selon l'une des revendications 1 à 3, **caractérisé en ce que** le mécanisme de différentiel (32, 132) est agencé à côté du dispositif moteur (12).

5. Kit de montage pour transmissions de véhicules automobiles (10, 110) de différents types, avec une unité d'arbre à pignon pour un mécanisme de différentiel (32, 132), avec un autre arbre (26, 126) et avec une articulation (28, 128) pour coupler l'unité d'arbre à pignon avec l'autre arbre (26, 126),
**caractérisé en ce que** l'unité d'arbre à pignon est constituée d'un arbre à pignon (30, 130), d'une partie de liaison (31, 131) pour coupler l'arbre à pignon avec un arbre intermédiaire et de l'arbre intermédiaire (29, 129) pour se coupler avec l'articulation, la partie de liaison étant une cannelure à emboîtement ou un assemblage à brides et un arbre (30, 126) ou l'unité d'arbre à pignon étant disponible au moins en deux exemplaires de différentes longueurs.

6. Kit de montage selon la revendication 5, **caractérisé en ce que** l'arbre à pignon (30) et/ou l'arbre intermédiaire (29) est disponible ou sont disponibles au moins en deux exemplaires de différentes longueurs.

7. Kit de montage selon la revendication 5, **caractérisé en ce que** l'autre arbre (126) est disponible au moins en deux exemplaires de différentes longueurs.
